# FASCICULE DE BREVET EUROPEEN

(11) **EP 0 585 177 B1**
(45) Date de publication et mention de la délivrance du brevet: **26.03.1997**
(21) Numéro de dépôt: 93402103.1
(22) Date de dépôt: 26.08.1993
(51) Int. Cl.: G01F 23/24

(54) **Détecteur de liquide à thermistance**
Thermistor-Flüssigkeitsdetektor
Liquid detector with thermistor

(30) Priorité: 28.08.1992 FR 9210361
(43) Date de publication de la demande: 02.03.1994
(73) Titulaire: INTERTECHNIQUE, F-78370 Plaisir (FR)
(72) Inventeur: Le Pimpec, Michel, F-78180 Montigny le Bretonneux (FR)
(74) Mandataire: Fort, Jacques

(56) Documents cités:
- DE-A- 3 341 630
- FR-A- 1 456 920
- FR-A- 2 515 342
- US-A- 3 863 210
- US-A- 4 276 536

## Description

La présente invention concerne les détecteurs de présence de liquide, utilisables comme détecteurs de niveau d'un liquide dans un réservoir, du type comprenant une sonde contenant une résistance à coefficient de température négatif ou (CTN), un générateur électrique destiné à dissiper une puissance par effet Joule dans la sonde et des moyens pour comparer la valeur de la résistance de la sonde à un seuil déterminé.

Le principe utilisé dans ces détecteurs est la différence de conductibilité thermique entre les liquides et les gaz. Pour une même puissance dissipée dans une thermistance, la température d'équilibre atteinte est plus élevée lorsque la thermistance est dans un gaz que lorsqu'elle est dans un liquide. En mesurant la différence de potentiel aux bornes de la thermistance et connaissant le courant qui la traverse on peut déterminer la valeur de la résistance et dans quel milieu se trouve la thermistance.

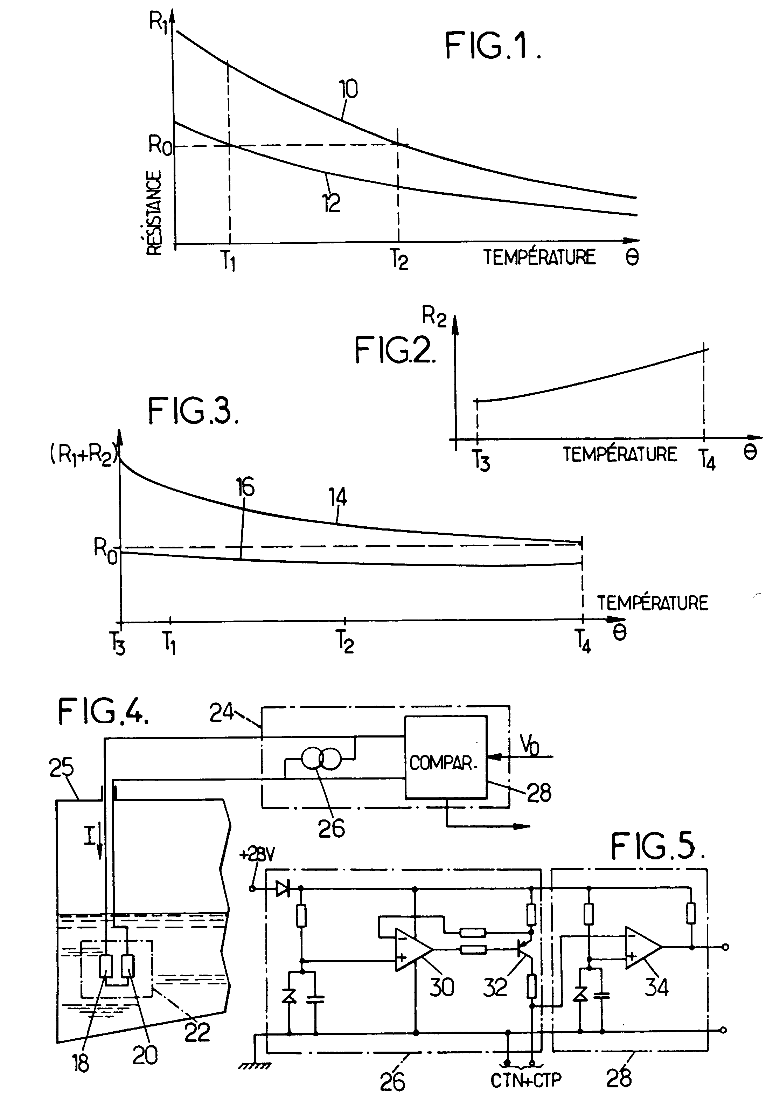

Les détecteurs actuels fondés sur ce principe présentent des limitations graves. En particulier, ils n'ont un fonctionnement satisfaisant que lorsque les températures du liquide et du gaz varient peu. Dans le cas contraire, il n'est plus possible de déterminer dans quel milieu se trouve la sonde par simple comparaison de sa résistance avec une valeur déterminée unique. La figure 1 illustre cette limitation dans le cas particulier d'un détecteur de niveau de carburant placé dans un réservoir et surmonté par de l'air, la thermistance étant du type CTN à variation de résistance suivant une loi se rapprochant d'une exponentielle négative. La résistance R₁ de la CTN varie en fonction de la température θ suivant la courbe 10 lors-qu'elle est plongée dans l'air, suivant la courbe 12 lorsqu'elle est plongée dans le carburant. Lorsqu'on utilise un seuil de discrimination R₀ constant, la détection de niveau ne peut s'effectuer qu'entre deux températures T1 et T2 relativement proches.

On connaît également (FR-A-2 515 342 et FR-A-1 456 920) un détecteur qui conforme au préambule de la revendication 1 ; mais il utilise une CTP dont la résistance croit brutalement à partir d'une température de transition et il n'y a pas mesure de la résistance totale des thermistances en série.

On connait enfin (DE-A-3 341 630) un détecteur ayant une chaîne verticale de CTP et de CTN alternés, de façon déceler le passage de la surface libre d'un liquide aux niveaux intermédiaires entre une thermistance d'un type et une thermistance de l'autre type.

La présente invention vise notamment à fournir un détecteur de liquide répondant mieux que ceux antérieurement connus aux exigences de la pratique, notamment en ce qu'il autorise une plage de mesures et une fiabilité notablement accrues.

Dans ce but l'invention propose un détecteur de liquide conforme à la revendication 1.

Grâce à cette disposition, et en utilisant une CTP dont la résistance, au milieu de la plage de fonctionnement prévue, est correctement proportionnée à celle de la CTN, on assure une compensation en température telle que la plage de mesures est notablement augmentée sans pour autant qu'il soit nécessaire de modifier le seuil de discrimination en fonction de la température.

Dans la pratique, la CTP aura généralement une résistance au milieu de la plage de températures de mesure comprise entre 1/10 et 1/100 de celle de la CTN. En conséquence la chaleur dissipée dans la CTP est très faible, comparée à la chaleur dissipée par la CTN, et ne perturbe pratiquement pas le milieu environnant. En conséquence la résistance de la CTP est représentative de la température de ce milieu.

On utilisera en règle générale une CTP dont la résistance varie en fonction de la température de façon approximativement linéaire.

Les détecteurs de liquide classiques nécessitent trois fils d'alimentation, donc trois points de connexion. Deux des fils alimentent la sonde en courant. Le troisième fil permet de mesurer la tension aux bornes de la thermistance et donc d'en déduire la résistance de cette dernière. Un autre but recherché par l'invention est de réduire le nombre de points de connexion, ce qui présente un avantage tout particulier en aéronautique, où la réalisation des connexions est coûteuse, du fait de la qualité requise. L'invention propose dans ce but un détecteur dans lequel le générateur électrique est un générateur à courant constant de sorte que la tension aux bornes du générateur est représentative de la résistance de la sonde.

Un avantage supplémentaire de cette constitution, lorsque plusieurs détecteurs de présence de liquide comportent chacun une sonde placée à un niveau différent dans un réservoir, de façon à constituer un détecteur de niveau, est que le nombre de fils qui doivent pénétrer dans le réservoir est réduit d'un tiers, ce qui est particulièrement appréciable en aéronautique où l'on cherche à réduire le nombre des pénétrations dans les réservoirs. Le gain de masse est également appréciable.

L'invention sera mieux comprise à la lecture de la description qui suit d'un mode particulier de réalisation donné à titre d'exemple non limitatif. La description se réfère aux dessins qui l'accompagnent, dans lesquels :
- la figure 1, déjà mentionnée, montre la variation de la résistance R₁ d'une CTN parcourue par un courant constant, en fonction de la température ambiante, lors-qu'elle est placée dans l'air et dans un liquide ;
- la figure 2 montre l'allure de la courbe de variation de la résistance R₂ d'une CTP en fonction de la température θ ;
- la figure 3, similaire à la figure 1, montre la loi de variation de la résistance totale d'une sonde conforme à un mode particulier de réalisation de l'invention, en fonction de la température ambiante, lorsque la sonde est dans l'air et lorsqu'elle est dans un liquide ;
- la figure 4 est un schéma de principe d'un détecteur de niveau mettant en oeuvre l'invention ; et
- la figure 5 montre une constitution de l'électronique.

L'invention part de la constatation qu'il est possible de réduire l'incidence de la température ambiante sur la résistance d'une sonde à thermistance de type CTN en montant, en série avec cette CTN, une CTP de valeur notablement inférieure, ayant une résistance, dans la plage de mesures, et un coefficient de température choisis de façon appropriée. Pour cela, on utilisera une thermistance à coefficient de température positive présentant non pas une variation brutale de résistance, mais une variation progressive c'est-à-dire dont la caractéristique résistance-température ne comporte pas de coude ayant une courbure très supérieure à celle des parties de la caractéristique avant et après le coude. En général la variation sera approximativement linéaire, du genre montré en figure 2, pour toute la plage de températures de mesure prévue, entre T₃ et T₄.

Dans ce cas, la variation de la résistance R₁+R₂ de la thermistance en fonction de la température ambiante θ, lorsqu'un courant constant et déterminé parcourt la thermistance, est du genre indiqué par la courbe 14 lorsque la sonde est dans l'air, par la courbe 16 lorsqu'elle est immergée. On constate qu'on peut alors déterminer sans ambiguïté le milieu dans lequel se trouve la sonde en comparant la résistance R₁+R₂ à un seuil de discrimination déterminé fixe R₀, pour une plage allant de T₃ à T₄, très supérieure à la plage T₁-T₂.

A titre d'exemple, on a réalisé un détecteur de carburant d'avion dans un réservoir utilisant une CTN 18 ayant une résistance au milieu de la plage de mesures d'environ 10 KΩ et une CTP 20 ayant une résistance au milieu de la plage de mesures d'environ 200Ω. Il est possible de déterminer si la sonde est dans le carburant ou dans l'air (ou un gaz d'inertage surmontant le carburant) par comparaison avec une valeur fixe R₀ pour une plage de température allant de T₃=-30°C à T₄=90°C, ce qui se traduit par un domaine utile et pratique allant de -20°C à +60°C au moins.

Comme on l'a indiqué plus haut, l'invention permet de réaliser un détecteur comportant deux fils seulement de liaison entre la sonde 22 et l'électronique de mesure 24 qui lui est associée et qui est placée hors du réservoir 25. L'électronique comporte un générateur 26 de courant constant I et un circuit 28 de mesure de la tension, représentative de la résistance de la sonde, aux bornes du générateur 26. Le circuit 28 comporte également un comparateur entre la tension aux bornes du générateur 26 et une tension de discrimination V₀, représentative de la résistance R₀.

Le générateur de courant constant 26 peut notamment comporter un amplificateur différentiel 30 et un transistor bipolaire 32 dont l'émetteur est rebouclé sur l'entrée soustractive de l'amplificateur (figure 5). Le comparateur 28 peut de son côté être constitué par un montage discriminateur ayant un amplificateur différentiel à seuil 34.

Un ensemble détecteur peut être constitué par des sondes 22 placées à différents niveaux dans un réservoir et une électronique commune 24, munie de moyens de commutation commandés par un séquenceur et permettant de déterminer celles des sondes qui se trouvent immergées et celles qui sont émergées.

Il faut remarquer que le détecteur de liquide peut aisément être complété de façon à détecter lui même toute anomalie de fonctionnement. Il suffit en effet d'ajouter deux comparateurs supplémentaires aux bornes du générateur de courant 26. Un comparateur à minimum permet de déterminer la mise en court-circuit, qui se traduit par un effondrement de la tension aux bornes du générateur. Un comparateur à maximum permet de déterminer une situation de circuit ouvert, qui se traduit par une augmentation de la tension aux bornes qui arrive à une valeur nettement supérieure à la valeur maximale susceptible d'être rencontrée lors d'une mesure normale.

## Revendications

1. Détecteur de présence de liquide à un emplacement d'un réservoir, comprenant;une sonde (22) destinée à être placée audit emplacement et contenant une thermistance à coefficient de température négatif (18) et une thermistance à coefficient de température positif (20), monté électriquement en série avec la thermistance à coefficient de température négatif et au même niveau, et comprenant un générateur électrique (26) destiné à dissiper une puissance par effet Joule dans la sonde,
caractérisé en ce que la thermistance à coefficient de température positif a une variation progressive de sa résistance en fonction de la température; et en ce que le détecteur comporte également des moyens (28) pour comparer la valeur de la résistance totale des thermistances montées en série à un seuil déterminé.

2. Détecteur selon la revendication 1, caractérisé en ce que le seuil est maintenu à une valeur constante.

3. Détecteur selon la revendication 1 ou 2, caractérisé en ce que la thermistance à coefficient de température positif (20) a une résistance au milieu de la plage de température de mesure comprise entre 1/10 et 1/100 de celle de la thermistance à coefficient de température négatif (18).

4. Détecteur selon la revendication 1, 2 ou 3, caractérisé en ce que la thermistance à coefficient de température positif (20) a une résistance qui varie en fonction de la température de façon approximativement linéaire.

5. Détecteur selon l'une quelconque des revendications précédentes, caractérisé en ce que le générateur électrique (26) est un générateur à courant constant et en ce que lesdits moyens (28) sont prévus pour mesurer la tension aux bornes du générateur (26), représentative de la résistance de la sonde et la comparer à une valeur de référence.

6. Détecteur de niveau dans un réservoir selon la revendication 5, caractérisé en ce que le générateur (26) et lesdits moyens (28) sont placés hors du réservoir (25) et reliés à la sonde (22) par deux fils seulement.

7. Détecteur selon la revendication 5 ou 6, caractérisé en ce que lesdits moyens (28) comportent également des comparateurs de la tension aux bornes du générateur avec deux autres valeurs de référence, sélectionnées pour permettre de déterminer l'ouverture et la mise en court-circuit de la sonde.

## Patentansprüche

1. Detektor für den Nachweis einer Flüssigkeit an einer Stelle eines Behälters, welcher einen Sensor (22), der vorgesehen ist, an jener Stelle angebracht zu werden und einen Thermistor (18) mit negativem Temperaturkoeffizienten und einen Thermistor (20) mit positivem Temperaturkoeffizienten, der mit dem Thermistor mit negativem Temperaturkoeffizienten elektrisch in Reihe geschaltet ist, enthält, und auf gleichem Niveau eine elektrische Stromquelle (26), durch welche im Sensor elektrische Leistung in Joulesche Wärme umgewandelt wird, umfaßt, **dadurch gekennzeichnet, daß** sich der Widerstand des Thermistors mit positivem Temperaturkoeffizienten in Abhängigkeit von der Temperatur progressiv verändert **und daß** der Detektor auch Mittel (28) umfaßt, um den Wert des Gesamtwiderstandes der in Reihe geschalteten Thermistoren mit einem festgelegten Grenzwert zu vergleichen.

2. Detektor nach Anspruch 1, **dadurch gekennzeichnet, daß** der Grenzwert auf einen konstanten Wert gehalten wird.

3. Detektor nach Anspruch 1 oder 2, **dadurch gekennzeichnet, daß** sich der Widerstand des Thermistors (20) mit positivem Temperaturkoeffizienten in der Mitte des Temperaturmeßbereichs befindet und 1/10 bis 1/100 des Widerstands des Thermistors (18) mit negativem Temperaturkoeffizienten beträgt.

4. Detektor nach Anspruch 1, 2 oder 3, **dadurch gekennzeichnet, daß** sich der Widerstand des Thermistors (20) mit positivem Temperaturkoeffizienten in Abhängigkeit von der Temperatur näherungsweise linear verändert.

5. Detektor nach einem der vorhergehenden Ansprüche, **dadurch gekennzeichnet, daß** die elektrische Stromquelle (26) eine Gleichstromquelle ist und daß die Mittel (28) vorgesehen sind, um an den Anschlüssen der Stromquelle (26) die Spannung zu messen, die für den Widerstand des Sensors repräsentativ ist, und diese mit einem Bezugswert zu vergleichen.

6. Detektor für den Füllstand eines Behälters nach Anspruch 5, **dadurch gekennzeichnet, daß** die Stromquelle (26) und die Mittel (28) außerhalb des Behälters (25) angeordnet und mit dem Sensor (22) nur durch zwei Drähte verbunden sind.

7. Detektor nach Anspruch 5 oder 6, **dadurch gekennzeichnet, daß** die Mittel (28) auch Komparatoren für die Spannung an den Anschlüssen der Stromquelle mit zwei anderen Bezugswerten umfassen, die so ausgewählt sind, daß Öffnung und Kurzschluß des Sensors bestimmt werden können.

## Claims

1. Sensor for detecting whether liquid is present at location in tank, comprising: a probe (22) to be placed at said location and containing a negative temperature coefficient resistor (18) and a positive temperature coefficient resistor (20), electrically in series relation with the negative temperature coefficient resistor and at the same level and comprising an electrical source (26) for dissipating a power by Joule effect in the probe,
characterized in that the positive temperature coefficient resistor has a progressive variation of its resistance responsive to temperature and in that the probe further comprises means (28) for comparing the value of the total resistance of the serially mounted resistors with a predetermined threshold.

2. Sensor according to claim 1, characterized in that said threshold is maintained at a constant value.

3. Sensor according to claim 1 or 2, characterized in that the positive temperature coefficient resistor (28) has a resistance in the middle of the temperature range for measurement which is comprised between 1/10 and 1/100 of that of the negative temperature coefficient resistor 18.

4. Sensor according to claim 1, 2 or 3, characterized in that the positive temperature coefficient (20) has a resistance which varies responsive to temperature in accordance with substantially linear law.

5. Sensor according to anyone of the preceding claims, characterized in that the electrical source (26) is a constant generator and in that said means (28) are arranged for measuring the voltage accross the terminal of the source (26), which voltage represents the resistance of the probe, and to compare it with a reference value.

6. Sensor for detecting the level in a tank according to claim 5, characterized in that the source (26) and said means (28) are located out of the tank (25) and are connected to the probe (12) by only two wires.

7. Sensor according to claim 5 or 6, characterized in that said means (28) further comprise comparators between the voltage accross the terminals of the source with two additional reference values, which are selected for enabling determination of open and short circuit conditions of the probe.
